Europäisches Patentamt

(19) European Patent Office    (11) Publication number:    **0 093 921**

Office européen des brevets      **B1**

(12)      **EUROPEAN PATENT SPECIFICATION**

(45) Date of publication of patent specification: **22.10.86**      (51) Int. Cl.⁴: **G 02 B 5/18**

(21) Application number: **83103960.7**

(22) Date of filing: **22.04.83**

(54) Polygonal mirror and method of manufacturing the same.

(30) Priority: **23.04.82 JP 67321/82**

(43) Date of publication of application:
**16.11.83 Bulletin 83/46**

(45) Publication of the grant of the patent:
**22.10.86 Bulletin 86/43**

(84) Designated Contracting States:
**DE**

(56) References cited:
**DE-C- 110 178**

**FEINWERKTECHNIK & MESSTECHNIK, vol. 88,
no. 7, 1980 M. KUPKA et al. "Diamantfräsen
hochgenauer Metallspiegel", pages 346-350,
chapter 2.9**

**APPLIED OPTICS, vol. 18, no. 23, 1979 F.
COOKE "Generation of a spherical mirror in
aluminium", pages 3878, 3879**

**APPLIED OPTICS, vol. 17, no. 14, 1978 J. T. COX
et al. "Protected A1 mirrors with hi gh
reflectance in the 8-12-micron region from
normal to high angles of incidence", pages
2125, 2126**
**Laser focus, vol. 15, no. 7, 1979, p. 42-46 R.
Sherman**

(73) Proprietor: **HITACHI, LTD.**
**6, Kanda Surugadai 4-chome Chiyoda-ku
Tokyo 100 (JP)**
(73) Proprietor: **HITACHI KOKI CO., LTD.**
**6-2, Ohtemachi-2-chome
Chiyoda-ku, Tokyo (JP)**

(72) Inventor: **Hashimoto, Akira**
**1-64, Suehirocho-1-chome
Ohme-shi (JP)**
Inventor: **Arimoto, Akira**
**902-30, Nakatou
Musashimurayama-shi (JP)**
Inventor: **Saito, Susumu**
**25-2, Mejirodai-3-chome
Hachioji-shi (JP)**
Inventor: **Morita, Kenzi**
**338-13, Higashiasakawacho
Hachioji-shi (JP)**

(74) Representative: **Altenburg, Udo, Dipl.-Phys.
et al
Patent- und Rechtsanwälte Bardehle-
Pagenberg-Dost-Altenburg & Partner Postfach
86 06 20
D-8000 München 86 (DE)**

## Description

The present invention relates to a polygonal mirror and a method of manufacturing polygonal mirrors and more particularly to a polygonal mirror for laser beam scanning suitable for use in a laser printer and others.

A conventional optical reflecting mirror is formed in such a manner that a surface of a glass or metal substrate is lapped to a mirror surface finish, the surface thus lapped is coated with evaporated aluminum or the like through the vacuum evaporation or sputtering technique to increase the reflectivity of the surface, and the surface is further coated with a protection film. In recent years, however, an increase in the accuracy of a turning (or cutting) machine and an improvement in a cutting technique with a diamond cutting tool make it possible to form an optical mirror surface by a cutting operation, compare f.e. Laser Focus Vol. 15, No. 17, 1979, pages 42 to 46. This known cut mirror surface is coated over with a durable layer such as a SiO layer.

A substrate of a conventional optical element having a mirror surface is made of glass or a hard metal capable of being lapped. The surface of the optical element is coated with evaporated aluminum in order to increase reflectance, and is further coated with a thin film of SiO or $SiO_2$ for mechanical protection. In such an optical element, the film of SiO or $SiO_2$ on the glass or hard metal substrate has a large mechanical strength and can serve as a protection film even when the thickness of each of evaporated aluminum and the film of SiO or $SiO_2$ is small because the mechanical strength of such a thin film depends on the hardness of the substrate.

However, such a conventional optical element is high in cost and low in handling efficiency since the element is required to have a high reflection coating or film and a film for mechanical protection of the surface.

An object of the present invention is to provide a polygonal mirror particularly for use in a laser printer in which highly reflective surface is formed by directly machining (or cutting) a surface of a substrate or a block made of aluminum or an aluminum alloy such as an Al—Mg alloy, an Al—Mg—Si alloy or an Al—Mn alloy.

Another object of the present invention is to provide a polygonal mirror particularly for use in a laser printer which has a characteristic of high reflectance and is capable of producing a constant scanning light intensity in a range of scan angle.

Yet another object of the present invention is to provide a method for manufacturing such a polygonal mirror.

These objects are attained according to the invention by a polygonal mirror as defined in claim 1 and by a method as defined in claim 4 from Applied Optics, Vol. 17, No. 14, pages 2125/2126 it is known to produce a durable coating by anodic oxidation on an aluminum mirror made of a glass substrate and an aluminum film deposited thereon.

The present invention will be apparent from the following detailed description taken in conjunction with the accompanying drawings, in which:

Fig. 1 is a perspective view showing a main part of a polygonal mirror according to the present invention;

Fig. 2 is a diagrammatic view for explaining interference of light caused by a single layer of thin transparent film;

Fig. 3 is a graph showing a relation between film thickness and reflectivity; and

Fig. 4 is a graph showing the variation of reflectivity with film thickness for a plurality of values of incident angle.

In order to realize a highly reflective polygonal mirror by fly-cutting, soft metal such as aluminum or aluminum alloys can be used and machined to a mirror surface. In the case of such a mirror made of soft metal, however, a thin film formed on the surface of the mirror cannot act as a protection film having a high mechanical strength. Accordingly, it is required to form a thick SiO or $SiO_2$ film on the surface. The SiO or $SiO_2$ film is small in growth rate and therefore it is inefficient to form such a film. Further, an apparatus for forming the above film is expensive, and in addition to this, handling efficiency is low.

In order to solve such difficulties, a polygonal mirror according to the present invention as claimed is made of aluminum or an aluminum alloy, and the reflecting surface of the mirror is fly-cut to a mirror surface. Further, the mirror surface thus obtained is anodized to form a film for mechanical protection.

As mentioned above, according to the present invention, a surface of an aluminum substrate or block is directly cut to a mirror surface, and therefore the high-reflectivity characteristic of aluminum is utilized effectively. Thus, it is not required to form a high-reflectivity film, but only a protection film is required. Moreover, a thin transparent film acting as the protection film can be advantageously readily formed on the aluminum substrate or block by anodic oxidation. In other words, one of the advantages of the present invention resides in that the anodic oxidation is applied as an optical mirror surface processing to an aluminum substrate or block to which it has been hard to apply the optical mirror surface processing.

The use of anodic oxidation has the following advantages. That is, a thick film can be readily formed, and an anodic oxidation apparatus for forming such a film is simple in structure, as compared with an evaporation or sputtering apparatus. Further, the thickness of a film formed by anodic oxidation is proportional to the quantity of electricity having flowed between electrodes, and therefore can be readily controlled. Thus, a protection film of good quality can be readily formed, and moreover the cost thereof can be reduced.

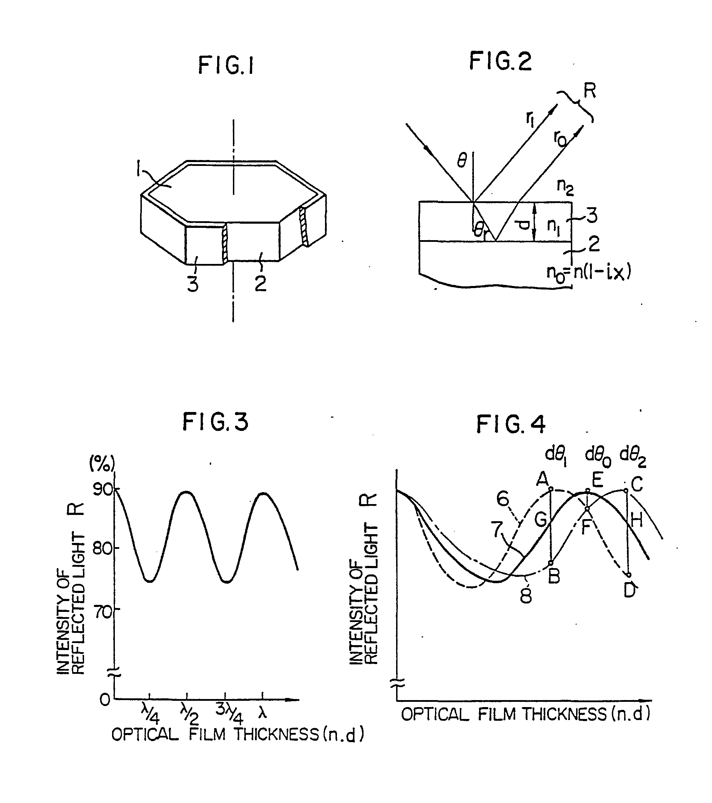

Now, a preferred embodiment of a polygonal mirror according to the present invention will be explained below, with reference to Fig. 1. In the figure, a block 1 of a polygonal mirror is made of aluminum or an aluminum alloy, the side surface of the block 1 is cut to mirror surfaces 2, and a thin transparent film 3 is formed by anodic oxidation to protect the mirror surfaces 2. The substrate 1 is preferably made of an Al—Mg alloy, which is suited for anodic oxidation. In the present invention, the film 3 formed by anodic oxidation does not lower the high reflectivity of the mirror surfaces, and moreover mechanically protects the surface of the block 1 made of a soft metal such as aluminum. The thin transparent film 3 produces a light interference phenomenon in accordance with the thickness thereof, that is, the reflectivity of the film 3 varies with the film thickness. Further, in the case where the polygonal mirror is rotated to carry out optical scanning, the incident angle of light at each mirror surface 2 varies with the rotational angle of the polygonal mirror, and thus the film thickness in the optical sense in the protection film 3 varies with the above-mentioned rotational angle. A change in the optical film thickness in the protection film 3 causes a change in the interference condition, and therefore the intensity of scanning light varies with the rotation of the mirror. The above-mentioned facts will be explained with reference to Fig. 2. In the figure, the thin transparent film 3 having a refractive index $n_1$ is formed, by anodic oxidation, on a mirror surface 2 of the aluminum block 1 having a refractive index $n_0 = n(1-ix)$ being a complex number. X is the extinction coefficient of aluminum. Now, let us consider the case when a medium outside the film 3 has a refractive index $n_2$ equal to 1. Then, the intensity R of reflected light is given by the following equation:

$$R = \frac{r_1^2 + r_0^2 + 2r_1 r_0 \cos \delta}{1 + r_1^2 r_0^2 + 2r_1 r_0 \cos \delta}$$

where $r_1$ indicates the amplitude of light reflected from the upper surface of the film, $r_0$ the amplitude of light reflected from the lower surface of the film, $\delta$ an angle equal to $4 \pi n_1 d \cos \theta_r / \lambda$, $\theta_r$ an angle of refraction, d the thickness of the film 3 formed by anodic oxidation, and $\lambda$ the wavelength of light.

When the factors $n_0$, $n_1$, $n_2$, $\theta_r$ and $\lambda$ are kept constant, the intensity R of reflected light is a function of the thickness d of the film 3 and a periodic function with respect to optical film thickness $n_1 d$. In the case of normal incidence, the intensity R of reflected light varies periodically with the optical thickness $n_1 d$ of the film 3, as shown in Fig. 3.

In the present embodiment, the refractive indices $n_0$, $n_1$ and $n_2$ have a relation

$$\sqrt{|n^2(1-x^2)|} > n_1 > n_2,$$

and therefore the film 3 can act as an antireflection film. As is apparent from Fig. 3, in order to make maximum the intensity of reflected light, it is necessary to make the optical film thickness $n_1 d$ equal to $m\lambda/2$. In a polygonal mirror for optical scanning, however, the optical film thickness $n_1 d$ for making maximum the intensity of reflected light is not constant, since the incident angle $\theta$ of light at the upper surface of the film 3 varies with the rotation of the polygonal mirror.

Now, let us consider the case where the incident angle $\theta$ varies from $\theta_1$ to $\theta_2$ to obtain an optical scanning range. Then, the film thickness d for making maximum the intensity of reflected light varies from $d_{\theta_1}$ to $d_{\theta_2}$, and the values $d_{\theta_1}$ and $d_{\theta_2}$ are given by the following equations:

$$d_{\theta_1} = \frac{m\lambda}{2n_1 \cos \theta_{r_1}}, \ d_{\theta_2} = \frac{m\lambda}{2n_1 \cos \theta_{r_2}}$$

where $\sin \theta_1 = n_1 \sin \theta_{r_1}$, $\sin \theta_2 = n_1 \sin \theta_{r_2}$, $d_{\theta_1} < d_{\theta_2}$, and m is a positive integer other than zero.

Fig. 4 shows the variation of the intensity of reflected light with the optical film thickness for some values of incident angle. Referring to Fig. 4, when a reflecting mirror is rotated so that the incident angle is changed from $\theta_1$ to $\theta_2$, the optical film thickness for making maximum the intensity of reflected light varies with the above rotation. In more detail, for the incident angle $\theta_1$, the intensity of reflected light varies with the optical film thickness as indicated by a curve 6. On the other hand, for the incident angle $\theta_2$, the intensity of reflected light varies as indicated by a curve 8. Accordingly, in the case where a reflecting mirror having the film thickness capable of making maximum the intensity of reflected light when light impinges upon the mirror at the incident angle $\theta_1$, is rotated so that the incident angle is changed from $\theta_1$ to $\theta_2$, the intensity of reflected light varies from a point A to a point B. On the other hand, in the case where a reflecting mirror having the film thickness capable of making maximum the intensity of reflected light when light impinges upon the mirror at the incident angle $\theta_2$ is rotated, the intensity of reflected light varies from a point D to a point C.

For an incident angle $\theta_0$ corresponding to the center of the optical scanning range, the intensity of reflected light varies with the optical film thickness as indicated by a curve 7. When the thickness of the film takes a value $d_{\theta_0}$ in order for the intensity of reflected light to be maximum at the incident angle $\theta_0$, the variation of the intensity of reflected light with the incident angle can be made smallest as shown in Fig. 4, that is, the intensity of reflected light varies only in a range from a point E to a point F. Accordingly, the optical thickness of the film is set so that the intensity of reflected light is maximum at the incident angle $\theta_0$ corresponding to a central portion of the optical scanning range, that is, is made equal to

$$n_1 d_{\theta_0}(= m\lambda/2 \cos \theta_{r_0}).$$

As has been explained in the foregoing description, according to the present invention as claimed, a protection film is high in transparency, and therefore the thickness of the film can be made large to increase the mechanical strength thereof, thereby producing a remarkable protection effect. Further, since the film is formed by anodic oxidation, the growth rate of the film is high. Furthermore, the film can be formed without using expensive apparatuses such as an evaporation apparatus and a sputtering apparatus, and therefore a polygonal mirror according to the present invention is advantageous from the economical point of view.

**Claims**

1. A polygonal mirror, particularly for use in a laser printer, comprising:
a block (1) having a plurality of surfaces (2) thereon directly machined by cutting with precision to mirror surfaces (2), said block (1) being made of aluminum or an aluminum alloy; and
a transparent film (3) formed on said surfaces (2), said transparent film (3) being used as a protection film for said mirror surfaces (2) characterized in that said transparent film (3) is formed by anodizing said surfaces (2) said transparent film (3) has a thickness of $m\lambda/2n_1 \cos \theta_{r0}$, where $\theta_{r0}$ indicates the angle of refraction of incident light corresponding to a central portion of an optical scanning range, $n_1$ the refractive index of said transparent film (3), $\lambda$ the wavelength of light and m a positive integer other than zero, whereby the variation of the intensity of reflected light with the incident angle can be made small.

2. A polygonal mirror according to claim 1, characterized in that said aluminum alloy further contains at least Mg.

3. A polygonal mirror according to claim 1, characterized in that said aluminum alloy is one selected from the group consisting of an Al—Mg alloy, an Al—Mg—Si alloy and an Al—Mn alloy.

4. A method of manufacturing a polygonal mirror, particularly for use in a laser printer comprising the steps of preparing a block (1) of aluminum or an aluminum alloy, cutting said block (1) to provide mirror surfaces (2) thereon, forming a transparent film (3) on said mirror surfaces (2) to protect said surfaces (2), characterized in that said transparent film (3) is formed by anodizing said surfaces (2) to have a thickness of $m\lambda/2n_1 \cos \theta_{r0}$, where $\theta_{r0}$ indicates the angle of refraction of incident light corresponding to a central portion of an optical scanning range, $n_1$ the refractive index of said transparent film (3), $\lambda$ the wavelength of light and m a positive integer other than zero.

**Patentansprüche**

1. Polygonspiegel, insbesondere zur Verwendung in einem Laserdrucker, mit
einem Block (1) mit einer Vielzahl von Oberflächen (2), welche direkt bearbeitet sind durch Präzisionsschneiden zu Spiegeloberflächen (2), wobei der Block (1) aus Aluminium oder einer Aluminiumlegierung besteht, und
einem durchsichtigen Film (3), welcher auf den Oberflächen (2) gebildet ist und als Schutzfilm für die Spiegeloberflächen (2) dient,
dadurch gekennzeichnet, daß der durchsichtige Film (3) durch anodisches Oxidieren der Oberflächen (2) gebildet ist und eine Dicke von $m\lambda/2n_1 \cos \theta_{r0}$ aufweist, wobei $\theta_{r0}$ den Brechungswinkel des einfallenden Lichts entsprechend einem zentralen Teil eines optischen Abtastbereichs, $n_1$ den Brechungsindex des durchlässigen Filmes (3), $\lambda$ die Wellenlänge des Lichtes und m eine positive ganze Zahl ungleich Null angibt, wobei die Veränderung der Intensität des reflektierten Lichtes mit dem Einfallswinkel klein gemacht werden kann.

2. Polygonspiegel nach Anspruch 1, dadurch gekennzeichnet, daß die Aluminiumlegierung außerdem mindestens Magnesium enthält.

3. Polygonspiegel nach Anspruch 1, dadurch gekennzeichnet, daß die Aluminiumlegierung eine Al—Mg—legierung, eine Al—Mg—Si—Legierung oder eine Al—Mn—Legierung ist.

4. Verfahren zur Herstellung eines Polygonspiegels, insbesondere zur Verwendung in einem Laserdrucker, bei welchen ein Block (1) aus Aluminium oder einer Aluminiumlegierung hergestellt wird, der Block (1) geschnitten wird, um darauf Spiegeloberflächen (2) zu schaffen, und ein durchlässiger Film (3) auf den Spiegeloberflächen (2) gebildet wird, um die Oberflächen (2) zu schützen, dadurch gekennzeichnet, daß der durchlässige Film (3) durch anodisches Oxidieren der Oberflächen (2) in einer Dicke von $m\lambda/2n_1 \cos \theta_{r0}$ gebildet wird, wobei $\theta_{r0}$ den Brechungswinkel des einfallenden Lichtes entsprechend einem zentralen Bereich eines optischen Abtastbereiches, $n_1$ den Brechungsindes des durchlässigen Films (3), $\lambda$ die Wellenlänge des Lichtes und m eine positive ganze Zahl ungleich Null angibt.

**Revendications**

1. Miroir polygonal destiné à être utilisé dans une imprimante laser, comprenant:

— un bloc (1) possédant une pluralité de surfaces (2) usinées directement par découpage de précision pour former des surfaces (2) de miroir, ledit bloc (1) étant constitué en aluminium ou en un alliage d'aluminium; et
— une pellicule transparente (3) qui est formée sur lesdites surfaces (2) et est utilisée en tant que pellicule de protection pour lesdites surfaces (2) de miroir,

caractérisé en ce que ladite pellicule transparente (3) est formée par anodisation desdites surfaces (2), que ladite pellicule transparente (3) possède une épaisseur égale à $m\lambda/2n_1 \cos \theta_{r0}$,

dans laquelle $\theta_{r0}$ désigne l'angle de réfraction de la lumière incidente correspondant à une partie centrale d'une plage de balayage optique, $n_1$ est l'indice de réfraction de ladite pellicule transparente (3), $\lambda$ est la longueur d'onde de la lumière et m est un nombre entier positif différent de zéro, ce qui permet de régler à une faible valeur la variation de l'intensité de la lumière réfléchie en fonction de l'angle d'incidence.

2. Miroir polygonal selon la revendication 1, caractérisé en ce que ledit alliage d'aluminium contient en outre au moins du Mg.

3. Miroir polygonal selon la revendication 1, caractérisé en ce que ledit alliage d'aluminium est choisi parmi le groupe incluant un alliage de Al—Mg, un alliage de Al—Mg—Si et un alliage de Al—Mn.

4. Procédé de fabrication d'un miroir polygonal destiné à être utilisé dans une imprimante laser, incluant les phases opératoires consistant à préparer un bloc (1) en aluminium ou en un alliage d'aluminium, à découper ledit bloc (1) de manière à y former des surfaces (2) de miroir, à former une pellicule transparente (3) sur lesdites surfaces (2) de miroir de manière à protéger ces surfaces (2), caractérisé en ce que l'on forme ladite pellicule transparente (3) par anodisation desdites surfaces (2), de manière qu'elle possède une épaisseur égale à $m\lambda/2n_1 \cos \theta_{r0}$ dans laquelle $\theta_{r0}$ désigne l'angle de réfraction de la lumière incidente correspondant à une partie centrale d'une plage de balayage optique, $n_1$ est l'indice de réfraction de ladite pellicule transparente (3), $\lambda$ est la longueur d'onde de la lumière et m est un nombre entier positif différent de zéro.

FIG.1

FIG.2

FIG.3

FIG.4